# EUROPEAN PATENT APPLICATION

(11) **EP 3 073 448 A1**
(43) Date of publication of application: **28.09.2016**
(21) Application number: 15465504.7
(22) Date of filing: 23.03.2015
(51) Int. Cl.: G07C 5/08, H04N 7/18, H04N 1/00, B60R 1/00

(54) **VEHICLE CONTROL APPARATUS AND VEHICLE CONTROL METHOD**

(71) Applicant: Continental Automotive GmbH, 30165 Hannover (DE)
(72) Inventor: Nagy, Zsolt, 410219 Oradea (RO); Slabu, Alexandra-Maria, 300360 Timisoara (RO); Son, Andrei, 300588 Timisoara (RO); Tomescu, Victor, 310019 Arad (RO)
(74) Representative: Büchner, Jörg

(57) **Abstract**

The present invention provides vehicle control apparatus for a vehicle, comprising a first number of imaging sensors, a second number of trigger devices configured to capture a trigger input from an occupant of the vehicle and generate a respective trigger signal when a trigger input is captured, and a data transmission apparatus coupled to the imaging sensors and the trigger devices and configured to capture a number of media from the imaging sensors and transmit the captured media to a media receiving device when a trigger signal is generated by the trigger devices. Furthermore, the present invention provides a respective method.

## Description

### TECHNICAL FIELD

The invention relates to a vehicle control apparatus for a vehicle and a corresponding vehicle control method.

### BACKGROUND

Although explained in conjunction with passenger vehicles, like e.g. automobiles, the present invention is not limited to such vehicles. Instead, the present invention can be used with any vehicle that carries occupants.

In modern automobiles electronic systems are provided to the occupants of the vehicle, which allow the occupants to listen to radio stations, CDs, MP3s or watch movies on screens embedded in the vehicle.

Such media can be provided on data carriers in the vehicle. Furthermore media data can be downloaded over a network like the internet. This e.g. allows a driver of a vehicle to stream music from an online service or from his cloud storage to the vehicle and listen to his private music collection while driving the vehicle.

Furthermore, modern vehicles can comprise a number of cameras mounted on the vehicle. Such cameras can be used to provide data of the vehicles surroundings to driver assistance systems, like e.g. a lane departure warning system. A camera can also monitor the vehicles interior for example to monitor a driver and detect if the driver falls asleep.

It is not known to combine the cameras of the vehicle with the multi-media systems of the vehicle.

Accordingly, there is a need for an improved multi-media system in vehicles.

### SUMMARY

The present invention solves this problem with the features of a vehicle control apparatus according to independent claim 1 and the features of a vehicle control method according to claim 10.

Accordingly, the present invention provides:

A vehicle control apparatus for a vehicle, comprising a first number, e.g. one or more, of sensors, a second number, e.g. one or more, of trigger devices configured to directly or indirectly capture a trigger input from an occupant of the vehicle and generate a respective trigger signal when a trigger input is captured, and a data transmission apparatus coupled to the sensors and the trigger devices and configured to capture a number, e.g. one or more, of media, like an image, a sound, a video or the like from the sensors and transmit the captured media to a media receiving device when a trigger signal is generated by the trigger devices.

Furthermore, the present invention provides:

A vehicle control method for controlling a vehicle, comprising capturing especially with a number of sensors provided on the vehicle media, like an image, a sound, a video or the like, generating a trigger signal when a respective trigger input is directly or indirectly received from an occupant of the vehicle, transmitting the captured media to a media receiving device when a trigger signal is generated.

In the present invention the term "number" refers to one or more of the respective apparatuses or elements.

The present invention is based on the conclusion that modern vehicles provide sensors which cannot only be used to provide driver assistance systems with data about the vehicles surroundings but could also be used to take pictures or videos of the vehicle occupants of the vehicle surroundings or record sounds in and around the vehicle.

Therefore, the present invention uses this knowledge to provide a vehicle control apparatus which makes use of the sensors and uploads media which is captured by said sensors onto a media receiving device. The media receiving device can be any device which is capable of receiving the recorded media. For example the media receiving device can be a data storage, or the like.

The vehicle control apparatus provides trigger devices which capture trigger inputs from an occupant of the vehicle to timely trigger the recording or capturing and uploading process. Trigger inputs can e.g. be direct inputs of the occupants of the vehicle or indirect inputs derived from the behaviour of occupants of the vehicle.

The present invention therefore provides means to use sensors in the vehicle not only as data inputs for driver assistance systems but also as multi-media cameras and allows storing the captured media in e.g. a data storage.

The sensors can be sensors already available in the vehicle or dedicated sensors installed in the vehicle with the vehicle control apparatus according to the present invention.

Further embodiments of the present invention are subject of the further subclaims and of the following description, referring to the drawings.

In a possible embodiment the media receiving device comprises a central data storage device, like an online data storage device, especially a social network server, which is accessible over a public network, especially the internet. This allows automatically making the media which has been uploaded to the media receiving device available to the public or at least to a specific group of users of the online data storage device.

The online data storage device can also be a private online data storage device like a private online server. The online data storage can also be a server which is hosted by the owner of the vehicle e.g. at his home. In such an embodiment the server can be secured with a firewall which is only accessible via a VPN-connection (Virtual Private Network). In this case the data transmission apparatus is configured to establish a VPN connection to the server prior to uploading media to the server.

In another possible embodiment the data transmission apparatus comprises a wireless data interface configured to wirelessly transmit the captured media to the media receiving device. The wireless data interface can e.g. be a mobile phone based data interface. Short range data interfaces like Bluetooth, WLAN or the like are also possible. In an embodiment with a short range data interface the data transmission apparatus can comprise a local memory to store the captured media and upload them to the media receiving device only when a Bluetooth or WLAN connection or the like is available.

In a possible embodiment the sensors comprise at least one camera provided on the vehicle and configured to take pictures of at least one of the vehicle occupants, especially of the driver of the vehicle. A camera which is oriented to the cabin of the vehicle allows taking pictures of the occupants of the vehicle which are the most relevant type of pictures to upload to a social network.

In another possible embodiment the sensors comprise at least one camera provided on the vehicle and configured to take pictures of at least a part of the surroundings of the vehicle. A driver might want to provide information about the vehicles surroundings e.g. when driving on a sightseeing tour. In this case the cameras oriented to the vehicle surroundings allow taking such pictures and upload them to the media receiving device.

In a possible embodiment the trigger devices comprise a push button provided on the vehicle and configured to provide a trigger signal when the push button is pressed. This allows providing easy accessible trigger devices.

In another embodiment the vehicle control apparatus comprises a wireless short range data interface, especially a Bluetooth-Interface, wirelessly connectable to mobile devices, especially mobile telephones or smartphones, of the occupants of the vehicle and configured to receive trigger inputs from the mobile devices and generate a respective trigger signal when a trigger input is received. This allows occupants of the vehicle, which are not seated in the front row, where the push button trigger devices might be installed, to activate the upload mechanism.

In a possible embodiment the sensors comprise a number of different cameras oriented to different sections of the vehicle interior. Furthermore, every trigger device can be coupled with a specific camera. For example a smartphone of an occupant of the vehicle sitting on the back seat can be coupled to a camera which is oriented to the back seats. This allows taking pictures of different persons in the vehicle depending on the respective trigger device.

In a possible embodiment the trigger devices comprise a face detection algorithm configured to detect faces, especially smiling faces, in the media captured by the sensors and generate a trigger signal when a face is detected. In a further possible embodiment the trigger devices comprise a laugh detection algorithm configured to detect laughs in the media, e.g. a voice recording, captured by the sensors and generate a trigger signal when a laugh is detected. This allows automatically detecting the right moment to take a picture of a person inside or in the surroundings of the vehicle.

In another possible embodiment the sensors and/or the triggering devices and/or the data transmission apparatus are communicatively coupled via a data bus of the vehicle. If e.g. a data bus of the vehicle is used to communicate the media data between sensors and the data transmission apparatus the same media data can be used by other vehicle systems. The data bus can e.g. be a CAN bus, a FlexRay bus, a LIN bus, a MOST bus or the like. The data bus can also be a Ethernet-based data bus or the like.

### BRIEF DESCRIPTION OF THE DRAWINGS

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily drawn to scale relative to each other. Like reference numerals designate corresponding similar parts.

Reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a vehicle control apparatus according to the present invention;
- Fig. 2: shows a flow diagram of an embodiment of a method according to the present invention;
- Fig. 3: shows a block diagram of a vehicle with an embodiment of a vehicle control apparatus according to the present invention.

### DETAILED DESCRIPTION OF THE DRAWINGS

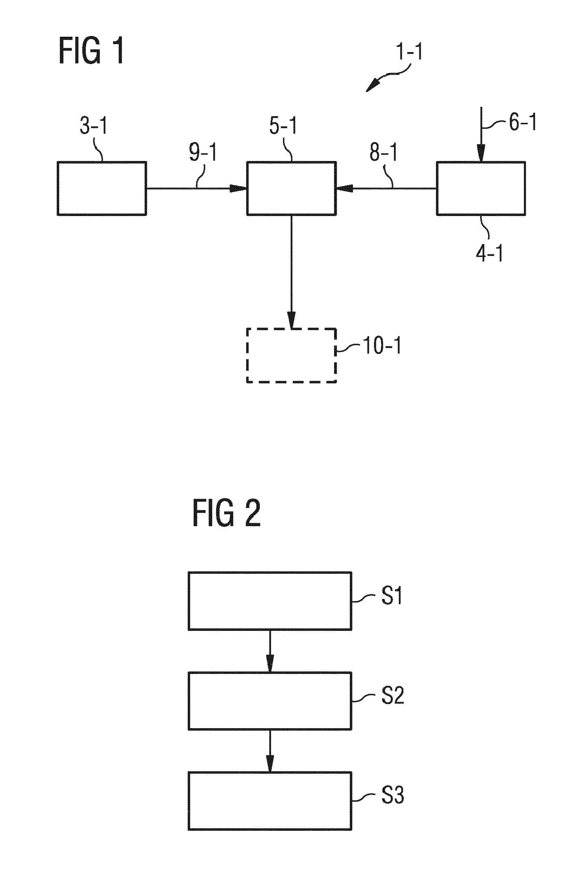

Fig. 1 shows a block diagram of an embodiment of a vehicle control apparatus 1-1 according to the present invention.

The vehicle control apparatus 1-1 comprises an sensor 3-1 and a trigger device 4-1 which are both coupled to a data transmission apparatus 5-1. Although in Fig. 1 only one exemplary sensor 3-1 and one exemplary trigger device 4-1 are shown any number of sensors and trigger devices is possible.

The sensor 3-1 can e.g. be a camera 3-1 which is configured to record images 9-1, videos, and/or audio messages of an occupant of a vehicle and provide the recorded images 9-1, videos, and/or audio messages to the data transmission apparatus 5-1.

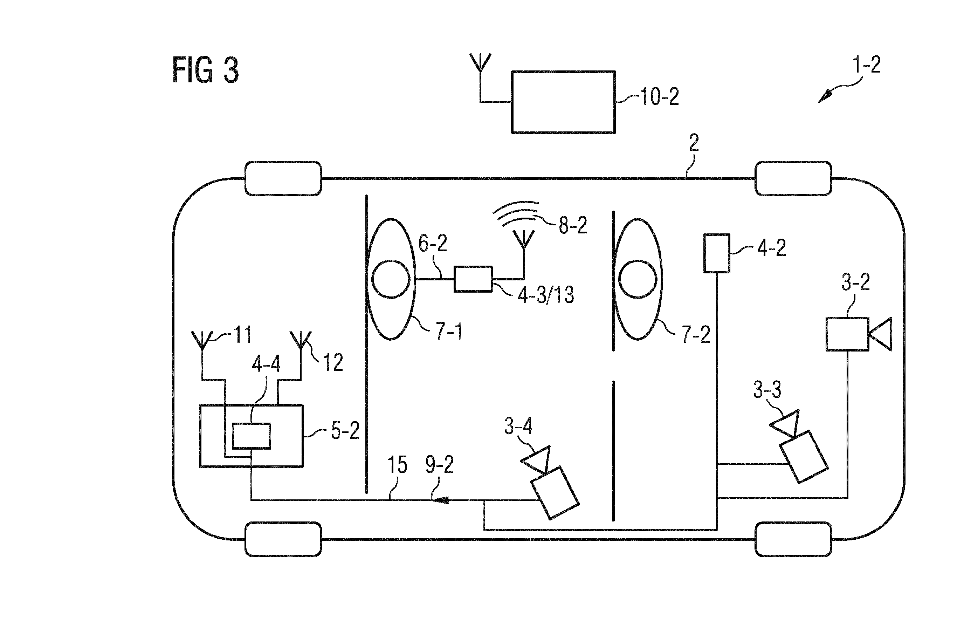

The trigger device 4-1 will wait for a trigger input 6-1 which can e.g. be input by an occupant of the vehicle (see Fig. 3). When such a trigger input 6-1 is received by the trigger device 4-1 it will create a trigger signal 8-1 and transmit this trigger signal 8-1 to the data transmission apparatus 5-1.

After the trigger signal 8-1 is received by the data transmission apparatus 5-1 the data transmission apparatus 5-1 will transmit a recently recorded image 9-1 to a media receiving device 10-1, which in this example is located outside of the vehicle control apparatus 1-1. This is depicted by a dashed outline of the media receiving device 10-1.

The media receiving device 10-1 can e.g. be an online data storage service or device. An online data storage service can e.g. be a cloud based data storage wherein an online data storage device can be e.g. a data storage server.

The media receiving device 10-1 can also be a social network server 10-1 which is accessible via a predefined API, application programming interface.

The media receiving device 10-1 can also be any electronic device capable of receiving the recorded media, like e.g. a smartphone, a tablet pc or the like.

The data transmission apparatus 5-1 in one embodiment can comprise a controller, e.g. a microcontroller, processor or the like running a respective program or operating system, which is capable of accessing the social network server 10-1 via said API and upload the image 9-1.

In one embodiment a user of the vehicle control apparatus 1-1, e.g. the owner of the respective vehicle, can provide the vehicle control apparatus 1-1 with his user credentials for accessing the social network server 10-1. This allows uploading the images, videos, and/or audio messages to the users account in the social network.

In other embodiments the image 9-1 can also be uploaded to a private data server of a user of the vehicle control apparatus 1-1. In such a case the data transmission apparatus 5-1 can also be configured to establish a VPN-connection to the private data server.

Fig. 2 shows a flow diagram of an embodiment of a method according to the present invention for controlling a vehicle 2.

The method comprises capturing, S1, media 9-1; 9-2, e.g. an image, a video, and/or an audio message, with a number of sensors 3-1 - 3-4 provided on the vehicle 2.

Furthermore a trigger signal 8-1; 8-2 can be created, S2, when a respective trigger input 6-1; 6-2 is received from an occupant 7-1; 7-2 of the vehicle 2.

When said trigger signal 8-1; 8-2 is generated the captured media 9-1; 9-2 can be transmitted to a media receiving device 10-1; 10-2.

To provide the recorded media to the public or at least a selected group of recipients transmitting, S3, can comprise transmitting the media 9-1; 9-2 to an online data storage device 10-1, 10-2, especially a social network server 10-1, 10-2. This can be done e.g. over a public network like the internet. A wireless connection can be used in one embodiment to transmit the media 9-1, 9-2 to the media receiving device 10-1; 10-2 aka the online data storage device 10-1, 10-2.

To provide interesting media content the at least one image 9-1; 9-2, video, and/or audio message can be taken of at least one of the vehicle occupants 7-1; 7-2, especially of the driver of the vehicle 2. Furthermore at least one image 9-1; 9-2, video, and/or audio message can be taken of at least a part of the surroundings of the vehicle 2.

The trigger signal 8-1; 8-2 can be generated in different ways. On possibility to create the trigger signal 8-1; 8-2 comprises generating the trigger signal 8-1; 8-2 when a push button in the vehicle 2 is pushed. Additionally or as an alternative the trigger signal 8-1; 8-2 can be generated over a wireless short range data interface 12 like e.g. a Bluetooth-Interface, when a trigger input 6-1; 6-2 is received in at least one mobile device, like a mobile telephone or smartphone 13. As a further alternative or additional measure the trigger signal 8-1; 8-2 can be generated by detecting faces, especially smiling faces e.g. with a face or laughing detection algorithm 14 in the captured media 9-1; 9-2 and generating a trigger signal 8-1; 8-2 when a face or laugh is detected.

Fig. 3 shows a block diagram of a vehicle 2 with an embodiment of a vehicle control apparatus 1-2 according to the present invention.

The vehicle control apparatus 1-2 of Fig. 3 comprises three cameras 3-2 - 3-4 which act as sensors 3-2 - 3-4. Camera 3-2 is directed to the front of the vehicle 2 and can be a camera 3-2 of a driver assistance system, e.g. a lane departure warning system. Camera 3-3 is positioned in the vehicle 2 to record images 9-2, videos, and/or audio messages of the driver 7-2 of the vehicle. Finally, camera 3-4 is positioned in the vehicle 2 to record images 9-2, videos, and/or audio messages of occupants 7-1 of the vehicle 2 on the back seats of the vehicle 2.

Furthermore, the vehicle control apparatus 1-2 of Fig. 3 comprises three trigger devices 4-2 - 4-4. The first trigger device 4-2 is a push button located in the front of the vehicle 2 such that the driver 7-2 can easily push said push button 4-2. The second trigger device 4-3 is a smartphone 13 of the second occupant 7-1 of the vehicle 2. Finally, the third trigger device 4-4 is a face detection algorithm 4-4 which is just exemplarily arranged in the data transmission apparatus 5-2.

The data transmission apparatus 5-2, the cameras 3-2 - 3-4 and the push button 4-2 are communicatively coupled via a data bus 15 of the vehicle 2.

In Fig. 3 the smartphone 13 is configured to receive a trigger input 6-2 from the occupant 7-1. This can e.g. a pushing of a virtual button displayed on the screen of the smartphone 13 by a corresponding application. If the trigger input 6-2 is received in the smartphone 13 the smartphone 13 transmits a trigger signal 8-2 to the data transmission apparatus 5-2, which is received by the data transmission apparatus 5-2 via a short range data interface, e.g. a Bluetooth interface.

The data transmission apparatus 5-2 of Fig. 3 can be configured to select the respective camera 3-2 - 3-4 from which the image 9-2, video, and/or audio message is recorded depending on the respective trigger signal 8-2. In case the trigger signal 8-2 is generated by the smartphone 13 the image 9-2, video, and/or audio message can e.g. be recorded by the camera 3-4. If the trigger signal 8-2 is generated by the push button 4-2 camera 3-3 can be selected to record the image 9-2, video, and/or audio message.

In one embodiment one trigger device can be a user interface of the vehicle, e.g. a touch screen of the vehicle or the smartphone 13. In such a case different selection means can be presented to the occupant to choose the camera 3-2 - 3-4 which should record the image 9-2, video, and/or audio message.

As already explained above a face detection algorithm 4-4 or a laugh detection algorithm can also be provided as trigger device 4-4. In this case the uploading of images 9-2, videos, and/or audio messages can automatically be triggered e.g. if a smiling face or a laugh is detected. For the automatic uploading of images 9-2, videos, and/or audio messages a frequency, e.g. number of pictures per hour, can be defined. Furthermore, the automatic uploading of images 9-2, videos, and/or audio messages based on e.g. the face detection algorithm can be deactivated e.g. by the driver 7-2 of the vehicle 2.

After receiving the trigger signal 8-2 the data transmission apparatus 5-2 will automatically and wirelessly upload the recorded image 9-2, video, and/or audio message to the media receiving device 10-2 via the wireless interface 11. The wireless interface 11 can e.g. be a GSM interface, a UMTS interface, a LTE interface or the like. In addition or as an alternative wireless interface 11 can comprise a WLAN or a Bluetooth interface and transmit recorded images 9-2, videos, and/or audio messages when a WLAN network or a Bluetooth data transmission device is within range.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 1-1; 1-2: vehicle control apparatus
- 2: vehicle
- 3-1 - 3-4: sensors
- 4-1 - 4-4: trigger devices
- 5-1; 5-2: data transmission apparatus
- 6-1; 6-2: trigger input
- 7-1; 7-2: occupant
- 8-1; 8-2: trigger signal
- 9-1; 9-2: media
- 10-1; 10-2: media receiving device
- 11: wireless data interface
- 12: wireless short range data interface
- 13: smartphone
- 15: data bus

- S1 - S3: method steps

## Claims

1. Vehicle control apparatus (1-1; 1-2) for a vehicle (2), comprising:
a first number of sensors (3-1 - 3-4);
a second number of trigger devices (4-1 - 4-4) configured to capture a trigger input (6-1; 6-2) from an occupant (7-1; 7-2) of the vehicle (2) and generate a respective trigger signal (8-1; 8-2) when a trigger input (6-1; 6-2) is captured; and
a data transmission apparatus (5-1; 5-2) coupled to the sensors (3-1 - 3-4) and the trigger devices (4-1 - 4-4) and configured to capture a number of media (9-1; 9-2) from the imaging sensors (3-1 - 3-4) and transmit the captured media (9-1; 9-2) to a media receiving device (10-1; 10-2) when a trigger signal (8-1; 8-2) is generated by the trigger devices (4-1 - 4-4).

2. Vehicle control apparatus (1-1; 1-2) according to claim 1,
wherein the media receiving device (10-1; 10-2) comprises a central data storage, especially an online data storage device, especially a social network server, which is accessible over a public network, especially the internet.

3. Vehicle control apparatus (1-1; 1-2) according to any one of claims 1 and 2,
wherein the data transmission apparatus (5-1; 5-2) comprises a wireless data interface (11) configured to wirelessly transmit the captured media (9-1; 9-2) to the media receiving device (10-1; 10-2).

4. Vehicle control apparatus (1-1; 1-2) according to any one of claims 1 to 3,
wherein the imaging sensors (3-1 - 3-4) comprise at least one camera provided on the vehicle (2) and configured to take pictures of at least one of the vehicle occupants (7-1; 7-2), especially of the driver of the vehicle (2).

5. Vehicle control apparatus (1-1; 1-2) according to any one of claims 1 to 4,
wherein the imaging sensors (3-1 - 3-4) comprise at least one camera provided on the vehicle (2) and configured to take pictures of at least a part of the surroundings of the vehicle (2).

6. Vehicle control apparatus (1-1; 1-2) according to any one of claims 1 to 5,
wherein the trigger devices (4-1 - 4-4) comprise a push button provided on the vehicle (2) and configured to provide a trigger signal (8-1; 8-2) when the push button is pressed.

7. Vehicle control apparatus (1-1; 1-2) according to any one of claims 1 to 6,
wherein the vehicle control apparatus (1-1; 1-2) comprises a wireless short range data interface (12), especially a Bluetooth-Interface, wirelessly connectable to mobile devices, especially mobile telephones or smartphones (13), of the occupants (7-1; 7-2) of the vehicle (2) and configured to receive trigger inputs (6-1; 6-2) from the mobile devices and generate a respective trigger signal (8-1; 8-2) when a trigger input (6-1; 6-2) is received.

8. Vehicle control apparatus (1-1; 1-2) according to any one of claims 1 to 7,
wherein the trigger devices (4-1 - 4-4) comprise a face detection algorithm (14) configured to detect faces, especially smiling faces and/or laughs, in the media (9-1; 9-2) captured by the imaging sensors (3-1 - 3-4) and generate a trigger signal (8-1; 8-2) when a face is detected.

9. Vehicle control apparatus (1-1; 1-2) according to any one of claims 1 to 8,
wherein the imaging sensors (3-1 - 3-4) and/or the triggering devices and/or the data transmission apparatus (5-1; 5-2) are communicatively coupled via a data bus (15) of the vehicle (2) .

10. Vehicle control method for controlling a vehicle (2), comprising:
capturing (S1) with a number of imaging sensors (3-1 - 3-4) provided on the vehicle (2) media (9-1; 9-2);
generating (S2) a trigger signal (8-1; 8-2) when a respective trigger input (6-1; 6-2) is received from an occupant (7-1; 7-2) of the vehicle (2);
transmitting (S3) the captured media (9-1; 9-2) to a media receiving device (10-1; 10-2) when a trigger signal (8-1; 8-2) is generated.

11. Vehicle control method according to claim 10,
wherein transmitting (S3) comprises transmitting the media (9-1; 9-2) to an online data storage device, especially a social network server, over a public network, especially the internet.

12. Vehicle control method according to any one of claims 10 and 11,
wherein transmitting (S3) comprises wirelessly transmitting the captured media (9-1; 9-2) to the media receiving device (10-1; 10-2).

13. Vehicle control method according to any one of claims 10 to 12,
wherein capturing (S1) the media (9-1; 9-2) comprises taking pictures of at least one of the vehicle occupants (7-1; 7-2), especially of the driver of the vehicle (2); and/or
wherein capturing (S1) the media (9-1; 9-2) comprises taking pictures of at least a part of the surroundings of the vehicle (2).

14. Vehicle control method according to any one of claims 10 to 13,
wherein generating (S2) a trigger signal (8-1; 8-2) comprises generating a trigger signal (8-1; 8-2) when a push button in the vehicle (2) is pushed; and/or
wherein generating (S2) a trigger signal (8-1; 8-2) comprises generating over a wireless short range data interface (12), especially a Bluetooth-Interface, wirelessly connectable to the mobile device, a trigger signal (8-1; 8-2) when a trigger input (6-1; 6-2) is received in at least one mobile device, especially mobile telephone or smartphone (13), of the occupants (7-1; 7-2) of the vehicle (2); and/or
wherein generating (S2) a trigger signal (8-1; 8-2) comprises detecting faces, especially smiling faces especially with a face detection algorithm (14), in the captured media (9-1; 9-2) and generating a trigger signal (8-1; 8-2) when a face is detected.
